# EUROPÄISCHE PATENTSCHRIFT

(11) **EP 3 690 816 B1**
(45) Veröffentlichungstag und Bekanntmachung des Hinweises auf die Patenterteilung: **17.08.2022**
(21) Anmeldenummer: 19154869.2
(22) Anmeldetag: 31.01.2019
(51) Int. Cl.: G06T 7/73, G06T 7/246

(54) **SCHÄTZEN EINER RELATIVEN POSITION UND LAGE EINES ZIELOBJEKTS IN BEZUG AUF EIN AUSGANGSOBJEKT**
ESTIMATION OF A RELATIVE POSITION AND ATTITUDE OF A TARGET OBJECT IN RELATION TO AN INITIAL OBJECT
ESTIMATION D'UNE POSITION ET D'UN EMPLACEMENT RELATIFS D'UN OBJET CIBLE PAR RAPPORT À UN OBJET DE SORTIE

(43) Veröffentlichungstag der Anmeldung: 05.08.2020
(73) Patentinhaber: Airbus Defence and Space GmbH, 82024 Taufkirchen (DE)
(72) Erfinder: Ahrns, Ingo, 28199 Bremen (DE); Haskamp, Christoph, 28199 Bremen (DE)
(74) Vertreter: Marschall, Stefan

(56) Entgegenhaltungen:
- US-A1- 2012 320 053
- US-A1- 2015 235 380
- A MASSON: "AIRBUS DS VISION BASED NAVIGATION SOLUTIONS TESTED ON LIRIS EXPERIMENT DATA", PROC. 7TH EUROPEAN CONFERENCE ON SPACE DEBRIS, 18. April 2017 (2017-04-18), Seiten 1-8, XP055599318, Darmstadt, Germany
- OPROMOLLA ROBERTO ET AL: "A review of cooperative and uncooperative spacecraft pose determination techniques for close-proximity operations", PROGRESS IN AEROSPACE SCIENCES, OXFORD, GB, Bd. 93, 21. Juli 2017 (2017-07-21), Seiten 53-72, XP085191302, ISSN: 0376-0421, DOI: 10.1016/J.PAEROSCI.2017.07.001

## Beschreibung

Die vorliegende Erfindung betrifft ein Verfahren zum Schätzen einer relativen Position und Lage eines Zielobjekts in Bezug auf ein Ausgangsobjekt. Darüber hinaus betrifft die Erfindung einen steuerbaren Raumflugkörper mit einer Rechen- und Messeinheit, die dazu eingerichtet ist, ein derartiges Verfahren auszuführen.

In Situationen, in denen ein vorbekanntes Zielobjekt ferngesteuert angenähert und dann bestimmten Prozeduren unterzogen werden soll, ist es im Allgemeinen wichtig, dass die jeweilige Position und Lage des Zielobjektes möglichst präzise erfasst wird. Stehen die genannten Informationen bereit, kann dann beispielsweise ein Roboter das Objekt greifen, um es an einen vorgesehenen Ort bzw. zu einer jeweiligen Einrichtung zu transportieren und/oder um sonstige Operationen wie beispielsweise Wartungsarbeiten an ihm vorzunehmen.

Insbesondere treten derartige Situationen unter Wasser oder an sonstigen unzugänglichen bzw. unerreichbaren Orten auf der Erde oder auch im Weltraum auf, beispielsweise beim sogenannten "On-Orbit-Servicing", bei dem ein steuerbarer Raumflugkörper einen zu wartenden oder instandzusetzenden Satelliten anfliegt und dabei (beispielsweise auf den letzten ca. 50m) auf Grundlage einer ermittelten Position und/oder Lage ausgerichtet und navigiert wird.

Sofern das jeweilige Zielobjekt keine visuellen Marken oder Retroreflektoren aufweist, die derartige Annäherungsprozesse erleichtern könnten, ist eine vorab bekannte, beispielsweise in Form von Konstruktionsdaten gegebene Gestalt des Objekts häufig das einzige Hilfsmittel, das bei einer Bestimmung von Position und Lage eines Objekts herangezogen werden kann. So können Sensordaten beispielsweise mit einem vorbekannten Modell des Objekts abgeglichen werden. Aus dem Ergebnis können eine relative Position und Lage des Objekts bestimmt werden.

Zum Realisieren einer derartigen Vorgehensweise sind verschiedene Ansätze bekannt. So wird gemäß einer verbreiteten Methode ein Konturenmodell des jeweiligen Zielobjekt mit dem Ergebnis einer Kantenfilterung eines Kamerabildes verglichen. Die Lösung eines damit formulierten Optimierungsproblems liefert dann eine Position und Lage des Objekts.

Alternative herkömmliche Verfahren bauen auf dreidimensionalen Punktwolken auf, die beispielsweise mittels jeweiliger Tiefenbildkameras, Stereokameras oder bildgebenden Lidar-Geräten aufgenommen werden. Die so gewonnenen Punktwolken werden dann mit einem räumlichen Modell des jeweiligen Zielobjekts verglichen. Die gesuchte relative Position und Lage kann dann mittels eines Optimierungsverfahrens (insbesondere des sogenannten "iterativen Closest-Point-Algorithmus ICP) bestimmt oder zumindest approximiert werden.

Ein Nachteil derartiger herkömmlicher Verfahren besteht darin, dass die genaue Kenntnis über die Form des jeweiligen Zielobjekts vorausgesetzt wird; dies ist in der Realität in vielen Fällen jedoch nur unzulänglich der Fall. So sind beispielsweise Zielobjekte in Form von Satelliten im Weltraum meist großflächig mit einem flexiblen Isolationsmaterial umgeben, das bei Fertigung des jeweiligen Satelliten manuell um diesen gelegt wurde und ihn vor thermischen Einflüssen schützen soll. Derartige Isolationsschichten ändern eine aus Konstruktionsplänen und/oder CAD-Modellen bekannte Geometrie des Satelliten.

Eine während einer Annäherung an den Zielsatelliten sensorisch aufgenommene Punktwolke kann daher nur mit eingeschränkter Genauigkeit mit den vorbekannten Konstruktionsdaten des teilweise vom Isolationsmaterial bedeckten Satelliten übereinstimmen. Die in der Realität auftretenden Abweichungen zwischen Isolationsschicht und Satellitenkörper, die beispielsweise im Bereich von etwa 2cm - 5cm liegen können, bedingen somit Fehler in der Positions- und Lagebestimmung und führen damit zu Ungenauigkeiten in der Navigation. Das Greifen bzw. Andocken wird dadurch erheblich erschwert.

Aus der US 2012/0320053 A1 sind ein Verfahren und eine Vorrichtung zum Schätzen einer Position und Orientierung eines Objekts bekannt.

Der vorliegenden Erfindung liegt die Aufgabe zugrunde, eine Technik bereitzustellen, mit der die Genauigkeit bei der Bestimmung einer relativen Position und Lage eines Zielobjekts (in Bezug auf ein Ausgangsobjekt) erhöht wird.

Die Aufgabe wird gelöst durch ein Verfahren gemäß Anspruch 1 und einen steuerbaren Raumflugkörper nach Anspruch 13. Vorteilhafte Ausführungsformen sind in den Unteransprüchen, der Beschreibung und den Figuren offenbart.

Ein erfindungsgemäßes Verfahren dient dem Schätzen (und damit möglichst genauen Bestimmen) einer relativen Position und Lage eines Zielobjekts in Bezug auf ein Ausgangsobjekt; das Ausgangsobjekt kann dabei beispielsweise zumindest ein Teil eines (insbesondere unbemannten) Land- oder Wasserfahrzeugs oder Fluggeräts (z.B. eines steuerbaren Raumflugkörpers) sein oder zumindest ein Teil eines Roboters.

Durch Abtasten einer Oberfläche des Zielobjekts werden bei einem erfindungsgemäßen Verfahren mehrere Sensorpunkten mittels mindestens eines Sensors akquiriert; der Sensor kann dabei mindestens ein Teil des Ausgangsobjekts sein oder in einer bekannten räumlichen Konstellation dazu angeordnet sein. In einem Optimierungsverfahren werden die akquirierten Sensorpunkte iterativ jeweils einem Modellpunkt eines Näherungsmodells für das Zielobjekt zugeordnet, bis eine Gesamtabweichung der akquirierten Sensorpunkte von den ihnen jeweils zugeordneten Modellpunkten minimiert ist oder unterhalb einer vorgegebenen Schranke liegt; die Gesamtabweichung kann dabei beispielsweise auf Grundlage der (euklidischen) Abstände der Sensorpunkte vom ihnen jeweils zugeordneten Modellpunkt und einer Summenbildung berechnet werden und/oder mittels einer integralbasierten Methode. Basierend auf einer aus dem Optimierungsverfahren resultierenden Zuordnung der Sensorpunkte wird dann die gesuchte relative Position und Lage des Zielobjekts geschätzt.

Das Näherungsmodell enthält dabei erfindungsgemäß als Modellpunkte sowohl Punkte, in denen das Näherungsmodell einem präzise bekannten Oberflächenbereich des Zielobjekts entspricht (und die im Folgenden als "Zielobjektpunkte" bezeichnet werden), als auch (im Weiteren "Näherungspunkte" genannte) Punkte, in denen das Näherungsmodell als unsicher bekannt ist. Das Optimierungsverfahren umfasst ein einmaliges oder wiederholtes Modifizieren des Näherungsmodells. Dabei wird (jeweils) mindestens ein Teil der Näherungspunkte geändert, wohingegen die Zielobjektpunkte beibehalten werden.

Ein erfindungsgemäßer Raumflugkörper ist steuerbar und umfasst mindestens einen Antrieb sowie eine Rechen- und Messeinheit mit mindestens einem Sensor. Die Rechen- und Messeinheit ist dabei dazu eingerichtet, die relative Position und Lage eines jeweiligen Zielobjekts in Bezug auf ein Ausgangsobjekt (das vorzugsweise zumindest ein Teil des Raumflugkörpers ist) gemäß einem erfindungsgemäßen Verfahren (in einer der in dieser Schrift offenbarten Ausführungsformen) zu schätzen.

Gemäß vorteilhaften Ausführungsformen umfasst ein derartiger Raumflugkörper mindestens ein Greifelement, das dazu eingerichtet ist, zum Zielobjekt hingeführt zu werden und dieses dann auf Grundlage einer geschätzten relativen Position und Lage des Zielobjekt zu greifen.

Erfindungsgemäß wird somit für die Schätzung ein adaptives Näherungsmodell verwendet, dessen Punkte hinsichtlich ihres Bekanntheitsgrades unterschieden werden. Auf diese Weise kann bei der Positions- und Lageschätzung berücksichtigt werden, dass das Näherungsmodell einerseits vorbekannte Bereiche des Zielobjekts präzise beschreibt, von denen jeweilige Sensorpunkte lediglich aufgrund eines Sensormessrauschens abweichen, dass aber in anderen Bereichen des Näherungsmodells sowohl die Modellpunkte als auch zugehörige Sensorpunkte ungenau sein können. In diesen Bereichen wird das Näherungsmodell dann modifiziert und kann so nach und nach (und insbesondere unter Verwendung der akquirierten Sensorpunkte) einer tatsächlichen äußeren Gestalt des Zielobjekts in dessen jeweils aktueller Position bzw. Lage angeglichen werden, die damit besonders genau bzw. zutreffend geschätzt werden kann.

Selbst bei nur ungenauer Kenntnis über die äußere Gestalt des Zielobjekts kann mittels der vorliegenden Erfindung somit präzise eine jeweilige Position und Lage des Zielobjekts bestimmt werden. Insbesondere kann daher in entsprechenden Anwendungen auf aufwendige Greifmechanismen mit besonders nachgiebigen und toleranten Andockmechanismen, die herkömmlicherweise zur Kompensation von Ungenauigkeiten in den Positions- und Lagedaten eingesetzt werden, verzichtet werden.

Der mindestens eine Sensor kann beispielsweise einen bildgebenden Lidar und/oder Radar umfassen und/oder eine Kamera, insbesondere eine Stereokamera und/oder eine Tiefenbildkamera. Die Sensorpunkte können zwei- oder dreidimensionale Daten sein, die beispielsweise Koordinatenwerte für jeweils erfasste Punkte der Oberfläche des Zielobjekts enthalten können. Analog kann das Näherungsmodell (in seinen jeweiligen Varianten / Modifikationen) zwei- oder dreidimensional sein. Vorzugsweise stimmen die Dimensionen der Sensorpunkte und des Näherungsmodells überein.

Gemäß vorteilhafter Ausführungsformen eines erfindungsgemäßen Verfahrens wird durch zumindest einen Teil der Zielobjektpunkte des Näherungsmodells wenigstens eine starre Oberfläche des Zielobjekts nachgebildet.

Eine derartige starre Oberfläche ist insbesondere weitgehend unabhängig von Umgebungseinflüssen und kann in einer festgelegten, stabilen Form gefertigt werden. Ein vorzugsweise auf Grundlage von Konstruktionsdaten erstelltes Näherungsmodell kann daher einer solchen Oberfläche sehr genau entsprechen und dort somit als zuverlässig gelten.

Wenigstens ein Teil der Näherungspunkte des Näherungsmodells kann gemäß vorteilhaften Ausführungsformen mindestens eine bewegliche oder sogar flexible Oberfläche des Zielobjekts nachbilden (bzw. approximieren). Eine solche Oberfläche kann irregulär ausgebildet sein und/oder kaum vorherzusehenden sich auf ihre Form auswirkenden Einflüssen unterliegen, so dass ihre Modellierung unsicher sein kann.

In mindestens einem Teil der Zielobjektpunkte stimmt das Näherungsmodell (in seinen verschiedenen Modifikationen) vorzugsweise mit einem Konstruktionsmodell (beispielsweise einem CAD-Modell) zumindest eines Teils des Zielobjekts überein.

Gemäß speziellen Ausführungsbeispielen der vorliegenden Erfindung ist das Zielobjekt ein Satellit, der insbesondere teilweise von mindestens einem Schutz- und/oder Isoliermaterial (z.B. einem Multilayer-Insulation-Material (MLI)) umhüllt sein kann.

Zielobjektpunkte des Näherungsmodells können bei derartigen Ausführungsformen Punkte umfassen, in denen das Näherungsmodell mindestens einen Bereich des Satelliten repräsentiert, von dem (insbesondere bei Anwendung des Optimierungsverfahrens) bekannt ist, dass er frei von derartigem Schutzmaterial ist: Ein derartiger Bereich kann beispielsweise eine mechanische Schnittstelle (beispielsweise einen Launch-Adapter-Ring) zur Verbindung des Satelliten (bei seinem Transport) mit einer Trägerrakete umfassen und/oder eine Düse eines Apogäumsmotors des Satelliten und/oder mindestens eine Baugruppe eines Lagetriebwerkes.

Gemäß vorteilhaften Ausführungsformen der vorliegenden Erfindung umfasst das Optimierungsverfahren ein Durchführen eines Iterative-Closest-Point-Algorithmus' mit gleichbleibendem Näherungsmodell (so dass also während dieses Durchführens keine Modifikation des Näherungsmodells erfolgt). Eine aus dem Iterative-Closest-Point-Algorithmus resultierende Zuordnung der akquirierten Sensorpunkte liefert dann vorzugsweise die Grundlage, aufgrund deren das Näherungsmodell zumindest einmal wenigstens in einem Teil seiner Näherungspunkte modifiziert wird. Auf diese Weise können zunächst die Sensorpunkte und das Näherungsmodell mittels durch den Iterative-Closest-Point-Algorithmus bestimmte Transformationen (insbesondere Rotationen und/oder Translationen) in möglichst gute Deckung miteinander gebracht werden, ehe das Näherungsmodell in den (als unsicher bekannten) Näherungspunkten modifiziert und die Übereinstimmung durch die Berücksichtigung der Schwächen des Näherungsmodells so weiter verbessert werden können.

Alternativ oder zusätzlich kann das Optimierungsverfahren beispielsweise ein Anwenden eines Coherent-Point-Drift-Verfahren, eines Robust-Point-Matching-Verfahrens, eines Kernel-Correlationsverfahrens, eines Simulated-Annealing-Verfahrens und/oder sonstiger Optimierungsalgorithmen umfassen. Gemäß einer vorteilhaften Ausführungsform der vorliegenden Erfindung umfasst das Optimierungsverfahren das Anwenden eines künstlichen neuronalen Netzes. Dies erlaubt insbesondere eine besonders effiziente fortschreitende Reduktion von Abweichungen zwischen dem Zielobjekt und einer jeweiligen Version des (modifizierten) Näherungsmodells.

Gemäß vorteilhaften Ausführungsformen umfasst ein erfindungsgemäßes Verfahren ein weiteres Akquirieren von Sensorpunkten durch Abtasten der Oberfläche oder einer anderen Oberfläche des Zielobjekts mittels des mindestens eines Sensors. Die dadurch akquirierten Sensorpunkte werden im Folgenden als "weitere Sensorpunkte" (oder auch "weitere Mehrzahl an Sensorpunkten") bezeichnet. Vorzugsweise umfasst eine solche Ausführungsform zudem ein weiteres Durchführen des Optimierungsverfahrens. Beim Durchführen eines (dem weiteren) nachfolgenden Optimierungsverfahrens kann dann mit einer Version des Näherungsmodells gestartet werden, die sich aus dem (zuvor erfolgten) weiteren Durchführen des Optimierungsverfahrens mit den weiteren Sensorpunkten ergeben hat. Auf diese Weise kann das Näherungsmodell anhand der nachfolgend erfassten Sensorpunkte weiterentwickelt und verbessert werden.

Die weiteren und die nachfolgend erfassten Sensorpunkte können bei derartigen Ausführungsformen in voneinander verschiedenem (ggf. mittleren) Abstand vom Zielobjekt und/oder aus voneinander verschiedenen Richtungen akquiriert werden. Insbesondere kann sich der mindestens eine Sensor zwischen dem Akquirieren von weiteren und nachfolgenden Sensorpunkten also relativ zum Zielobjekt bewegen, beispielsweise auf dieses zu. In das auf den weiteren und nachfolgenden Sensorpunkten beruhende nachfolgende Näherungsmodell fließen dann also vorteilhaft verschiedene Abstände und Perspektiven, insbesondere Sichtfelder ein. Dadurch kann das Näherungsmodell besonders gut an die tatsächliche äußere Geometrie des Zielobjekts angepasst werden.

Gemäß vorteilhaften Ausführungsformen der vorliegenden Erfindung erfolgt das Schätzen der relativen Position und Lage des Zielobjekts mehrmals: Insbesondere kann das Verfahren ein weiteres Schätzen der relativen Position und Lage auf Grundlage einer aus dem weiteren Durchführen resultierenden Zuordnung der Sensorpunkte umfassen. Ein nachfolgendes Schätzen der Position und Lage kann dann außer auf der Zuordnung, die sich dem nachfolgenden Durchführen ergibt, auf dem weiteren Schätzen beruhen, insbesondere kann beim nachfolgenden Schätzen das (frühere) Ergebnis des weiteren Schätzens verwendet werden.

Beispielsweise in Situationen, in denen beim nachfolgenden Schätzen aufgrund einer zu großen Nähe wesentliche Elemente des Zielobjekts aus dem Sichtfeld verschwunden sind, kann dadurch insbesondere die Lageschätzung verbessert werden.

Das Ändern der Näherungspunkte des Näherungsmodells erfolgt vorzugsweise jeweils innerhalb einer festgelegten Spanne um Punkte eines vorgegebenen Grundmodells. Das Grundmodell kann dabei beispielsweise durch ein Konstruktionsmodell des Zielobjekts gegeben sein. Durch die Spanne kann beispielsweise festgelegt sein, dass geänderte Näherungspunkte höchstens +/- 5cm, höchstens +/- 3cm oder höchstens +/- 2cm von dem Grundmodell abweichen. Auf diese Weise kann die Adaptivität des Näherungsmodells kontrolliert und in vorgegebenen Grenzen gehalten werden. Insbesondere können damit Fehlentwicklungen beispielsweise infolge eines Sensordefekts verhindert werden.

Die Spanne kann während des Durchführens des Optimierungsverfahrens geändert, insbesondere verkleinert werden, so dass dann also bei einem ersten Modifizieren des Näherungsmodells andere Schranken gelten als bei einem späteren Modifizieren.

Alternativ oder zusätzlich können - in entsprechenden Ausführungsformen, die ein mehrmaliges Durchführen des Optimierungsverfahrens mit jeweiligen Sensorpunkten umfassen - bei einem ersten Durchführen eine andere, insbesondere eine größere Spanne festgelegt sein als bei einem späteren Durchführen. Dies ermöglicht eine genaue Schätzung auch dann, wenn sich das Zielobjekt und das Ausgangsobjekt relativ zueinander bewegen und beispielsweise beim späteren Durchführen des Optimierungsverfahrens aufgrund der geänderten Perspektive ein Teil oder alle Zielobjektpunkte nicht mehr vom mindestens einen Sensor erfasst werden können.

Im Folgenden werden Aspekte bevorzugter Ausführungsbeispiele der vorliegenden Erfindung anhand von Zeichnungen näher erläutert. Bezugszeichen für einander entsprechende Elemente sind dabei figurenübergreifend verwendet.

Es zeigen schematisch:
- Figur 1 a - c :: eine Illustration von Schritten eines exemplarischen Optimierungsverfahrens als Teil eines erfindungsgemäßen Verfahrens;
- Figur 2:: ein Ablaufdiagramm eines Verfahrens gemäß einer Ausführungsform der vorliegenden Erfindung.

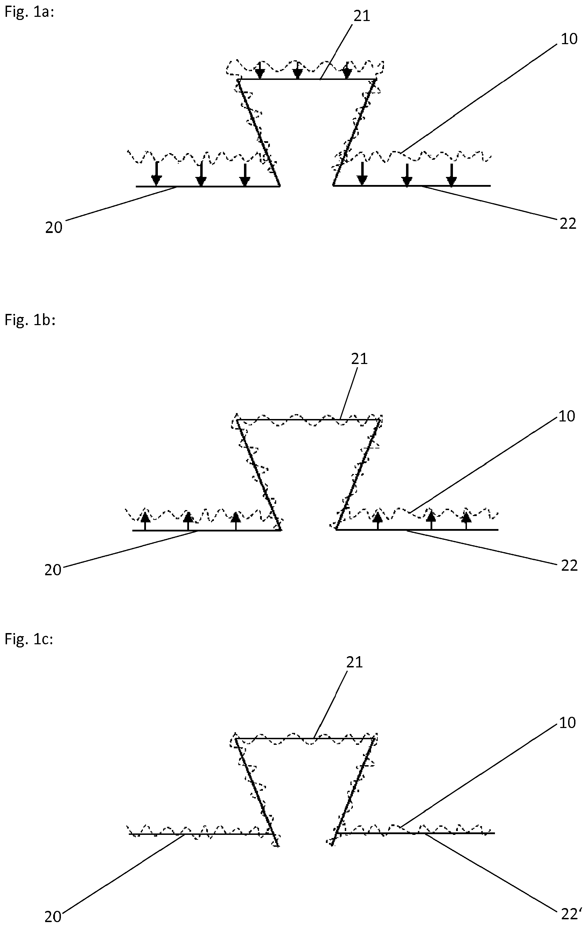

In den Figuren 1a - 1c ist eine Optimierungsverfahren erläutert, wie es in einem erfindungsgemäßen Verfahren Anwendung findet.

Dabei wird eine Mehrzahl von Sensorpunkten 10 verwendet, die zuvor mittels mindestens eines Sensors durch Abtasten einer Oberfläche eines jeweiligen Zielobjekts akquiriert wurden (nicht dargestellt). Die einzelnen Sensorpunkte 10 der so erhaltenen Punktwolke unterliegen Messungenauigkeiten und enthalten keine Information darüber, welche Oberflächenbereiche des Zielobjekts durch sie erfasst wurden. Zudem ist die Geometrie der Oberfläche dabei nur teilweise präzise bekannt (z.B. durch Konstruktionsdaten des Zielobjekts). Dem Verfahren liegt nun das Problem zugrunde, dass gleichwohl anhand der Sensorpunkte geschlossen bzw. abgeschätzt werden soll, wie das Zielobjekt angeordnet sein muss (wie also seine Position und Lage in Bezug auf ein Ausgangsobjekt, z.B. den Sensor sind), damit der Sensor diese Sensorpunkte akquirieren konnte.

Erfindungsgemäß wird dazu zumindest ein Bereich eines adaptiven Näherungsmodells 20 für das Zielobjekt nach und nach mit dem Sensorpunkten (d.h. den zugehörigen Daten) in Einklang gebracht:
In Figur 1a ist (mittels Pfeilen) illustriert, dass den einzelnen Sensorpunkten 10 jeweils ein Modellpunkt des Näherungsmodells 20 zugeordnet wird; das Näherungsmodell kann insbesondere ein Konstruktionsmodell (z.B. ein CAD-Modell) des Zielobjekts sein. Durch Verdrehen und/oder Verschieben von Näherungsmodell und Sensorpunkten relativ zueinander wird im Wege des (automatisierten) Optimierungsverfahrens versucht, das Näherungsmodell 20 und die Sensorpunktwolke möglichst gut miteinander in Deckung zu bringen, die Gesamtabweichung zwischen den Sensorpunkten 10 und den ihnen jeweils zugeordneten Modellpunkten also zu minimieren oder unterhalb eine vorgegebene Schranke zu senken. Dieses Vorgehen kann beispielsweise die Anwendung eines Iterative-Closest-Point-Algorithmus umfassen. Die Gesamtabweichung kann insbesondere auf Grundlage der euklidischen Abstände der Sensorpunkte 10 von den ihnen jeweils zugeordneten Modellpunkten bestimmt werden, beispielsweise kann dabei die Summe der jeweils quadrierten Abstände berechnet werden.

Erfindungsgemäß liegt dem verwendeten Optimierungsverfahren eine unterschiedliche Bewertung der Modellpunkte des Näherungsmodells 20 zugrunde: Dieses umfasst demnach Zielobjektpunkte 21, in denen das Näherungsmodell einem präzise bekannten Oberflächenbereich des Zielobjekts entspricht, sowie Näherungspunkte 22, in denen das Näherungsmodell als unsicher bekannt ist, beispielsweise weil in ihm nicht berücksichtigt ist, dass das Zielobjekt im Bereich der Näherungspunkte mit einem zusätzlichen Material wie z.B. einer Isolations- und/oder Schutzschicht bedeckt ist.

In Figur 1b ist dargestellt, wie die Sensorpunkte 10 und das Näherungsmodell 20 (im Vergleich zur Figur 1a) relativ zueinander verschoben sind. Dabei wurde die Punktwolke der Sensorpunkte 10 möglichst genau den Zielobjektpunkten 21 des Näherungsmodells 20 angenähert.

In den Näherungspunkten 22 hingegen wurde das Näherungsmodell dabei nicht mit den Sensorpunkten 10 in Deckung gebracht.

Die dort vorhandenen Abweichungen werden dann durch Ändern mindestens eines Teils der Näherungspunkte 22 reduziert; die Zielobjektpunkte 21 bleiben dabei erhalten: In Figur 1c ist das derart modifizierte Näherungsmodell 20 mit den beibehaltenen Zielobjektpunkten 21 und den geänderten Näherungspunkten 22' dargestellt. Wie aus der Figur 1c ersichtlich ist, kann auf diese Weise eine hohe Übereinstimmung von (modifiziertem) Näherungsmodell und Sensorpunkten 10 erreicht werden. Die Sensorpunkte 10 können damit jeweiligen Modellpunkten auf dem modifizierten Näherungsmodell 20 so zugeordnet werden, dass eine Gesamtabweichung minimiert wird. Auf Grundlage einer solchen Zuordnung können dann Position und Lage des Zielobjekts realitätsnah geschätzt werden.

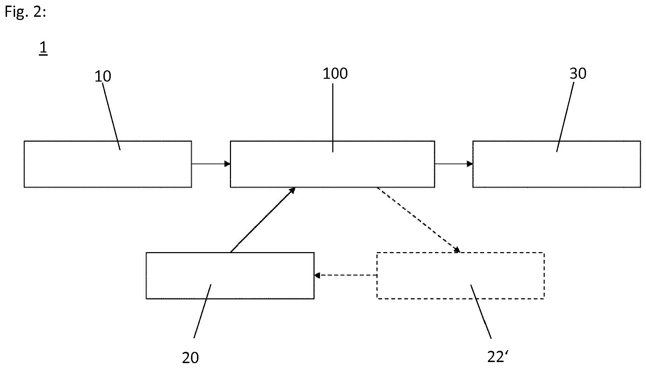

In Figur 2 ist ein Ablaufdiagramm eines Verfahrens 1 gemäß einer Ausführungsform der vorliegenden Erfindung dargestellt:
Wie in der Figur 2 zu erkennen ist, werden akquirierte Sensordaten 10 und ein Näherungsmodell 20 für ein Zielobjekt mittels eines Optimierungsverfahrens 100 verarbeitet. Dabei werden den Sensordaten iterativ Modellpunkte des Näherungsmodells zugeordnet und eine jeweils aus der Zuordnung resultierende Gesamtabweichung berechnet.

Das Näherungsmodell 20 umfasst Näherungspunkte und Zielobjektpunkte (nicht dargestellt). Zum Optimieren bzw. Verbessern der Zuordnung im Sinne einer Verminderung der Gesamtabweichung wird das Näherungsmodell modifiziert, indem es geänderte Näherungspunkte 22' erhält. Die geänderten Näherungspunkte können dabei aus einer jeweiligen, im Wege des Optimierungsverfahrens 100 vorgenommenen Zuordnung so bestimmt werden, dass eine zugehörige Gesamtabweichung reduziert wird. Dabei weichen die geänderten Näherungspunkte 22' vorzugsweise höchstens um eine vorgegebene Spanne von einem Grundmodell (das beispielsweise ein Konstruktionsmodell des Zielobjekts sein kann) ab, die Änderung ist also limitiert.

Das Optimierungsverfahren 100 wird mit dem modifizierten Näherungsmodell erneut durchgeführt, wobei gleiche und/modifizierte Verfahrensparameter verwendet werden können. Das Näherungsmodell kann dann weiter modifiziert werden.

Liegt die Gesamtabweichung nach einem oder mehreren derartigen Durchläufen und ggf. Modifikationen unterhalb einer vorgegebenen Schranke, können anhand der sich ergebenden Zuordnung die Position und Lage 30 des Zielobjekts in Bezug auf ein jeweiliges Ausgangsobjekt mit hoher Robustheit und Genauigkeit bestimmt werden.

Offenbart ist ein Verfahren 1 zum Schätzen einer relativen Position und Lage eines Zielobjekts in Bezug auf ein Ausgangsobjekt. Dazu werden durch Abtasten einer Oberfläche des Zielobjekts Sensorpunkte 10 akquiriert und mittels eines Optimierungsverfahrens 100 iterativ Modellpunkten eines Näherungsmodells 20 zugeordnet. Dessen Modellpunkte werden hinsichtlich ihres Bekanntheitsgrades unterschieden: Als unsicher bekannte Näherungspunkte 22, 22' des Näherungsmodells 20 werden im Rahmen des Optimierungsverfahrens geändert, wohingegen als sicher bekannte Zielobjektpunkte 21 des Näherungsmodells 20 dabei beibehalten werden.

### Bezugszeichen

- 1: erfindungsgemäßes Verfahren gemäß einer exemplarischen Ausführungsform

- 10: Sensorpunkte
- 20: Näherungsmodell
- 21: Zielobjektpunkte
- 22: Näherungspunkte
- 22': geänderte Näherungspunkte
- 30: Position und Lage

- 100: Optimierungsverfahren

## Patentansprüche

1. Verfahren (1) zum Schätzen einer relativen Position und Lage eines Zielobjekts in Bezug auf ein Ausgangsobjekt, wobei das Verfahren umfasst:
- Akquirieren einer Mehrzahl von Sensorpunkten (10) durch Abtasten einer Oberfläche des Zielobjekts mittels mindestens eines Sensors;
- Durchführen eines Optimierungsverfahrens (100), in dem die akquirierten Sensorpunkte (10) iterativ jeweils einem Modellpunkt eines gleichbleibenden Näherungsmodells (20) für das Zielobjekt zugeordnet werden, bis eine Gesamtabweichung der akquirierten Sensorpunkte von den ihnen jeweils zugeordneten Modellpunkten minimiert ist oder unterhalb einer vorgegebenen Schranke liegt; und
- Schätzen der relativen Position und Lage (20) des Zielobjekts auf Grundlage einer aus dem Optimierungsverfahren resultierenden Zuordnung der Sensorpunkte;
wobei das Näherungsmodell (20) als Modellpunkte Zielobjektpunkte (21) umfasst, in denen das Näherungsmodell einem präzise bekannten Oberflächenbereich des Zielobjekts entspricht, sowie Näherungspunkte (22, 22'), in denen das Näherungsmodell als unsicher bekannt ist,
**dadurch gekennzeichnet,**
**dass** das Optimierungsverfahren (100) zusätzlich ein einmaliges oder
wiederholtes Modifizieren des Näherungsmodells durch Ändern mindestens eines Teils seiner Näherungspunkte (22, 22') bei Festhalten an den Zielobjektpunkten (21) umfasst.

2. Verfahren gemäß Anspruch 1, wobei das Optimierungsverfahren (100) mindestens ein Durchführen eines Iterative-Closest-Point Algorithmus' mit gleichbleibendem Näherungsmodell umfasst und wobei das Modifizieren des Näherungsmodells zumindest einmal auf Grundlage einer aus dem Iterative-Closest-Point Algorithmus resultierenden Zuordnung der akquirierten Sensorpunkte (10) erfolgt.

3. Verfahren gemäß einem der Ansprüche 1 oder 2, wobei das Optimierungsverfahren (100) ein Anwenden eines künstlichen neuronalen Netzes umfasst.

4. Verfahren gemäß einem der vorhergehenden Ansprüche, wobei das Ändern der Näherungspunkte (22, 22') jeweils innerhalb einer festgelegten Spanne um Punkte eines vorgegebenen Grundmodells des Zielobjekts erfolgt.

5. Verfahren gemäß einem der vorhergehenden Ansprüche, wobei das Akquirieren der Mehrzahl an Sensorpunkten (10) ein nachfolgendes Akquirieren und das Durchführen des Optimierungsverfahrens (100) ein nachfolgendes Durchführen sind,
und wobei das Verfahren zudem
- vor dem nachfolgenden ein weiteres Akquirieren einer weiteren Mehrzahl an Sensorpunkten durch Abtasten der Oberfläche oder einer anderen Oberfläche des Zielobjekts mittels des mindestens eines Sensors sowie
- vor dem nachfolgenden ein weiteres Durchführen des Optimierungsverfahrens
umfasst,
und wobei das Durchführen des nachfolgenden Optimierungsverfahrens mit einer Version des Näherungsmodells startet, die sich aus der Durchführung des weiteren Optimierungsverfahrens mit der weiteren Mehrzahl an Sensorpunkten ergibt.

6. Verfahren gemäß Anspruch 5, wobei die Mehrzahl an Sensorpunkten (10) und die weitere Mehrzahl an Sensorpunkten in voneinander verschiedenem Abstand des mindestens einen Sensors vom Zielobjekt akquiriert werden.

7. Verfahren gemäß einem der Ansprüche 5 oder 6, wobei eine für das das Ändern der Näherungspunkte (22, 22') jeweils festgelegte Spanne um Punkte eines vorgegebenen Grundmodells des Zielobjekts beim nachfolgenden Durchführen des Optimierungsverfahrens kleiner ist als oder genauso groß ist wie beim weiteren Durchführen.

8. Verfahren gemäß einem der Ansprüche 5 bis 7, wobei das Schätzen der relativen Position und Lage (30) des Zielobjekts ein nachfolgendes Schätzen ist und zudem auf Grundlage einer Positions- und Lageschätzung erfolgt, die auf einer sich aus dem weiteren Durchführen des Optimierungsverfahrens ergebenden Zuordnung beruht.

9. Verfahren gemäß einem der vorhergehenden Ansprüche, wobei die Näherungspunkte (22, 22') des Näherungsmodells jeweils eine bewegliche oder sogar flexible Oberfläche des Zielobjekts nachbilden.

10. Verfahren gemäß einem der vorhergehenden Ansprüche, wobei die Zielobjektpunkte (21) des Näherungsmodells jeweils eine starre Oberfläche des Zielobjekts nachbilden.

11. Verfahren gemäß einem der vorhergehenden Ansprüche, wobei die Sensordaten (10) und das Näherungsmodell (20) jeweils zweidimensional oder jeweils dreidimensional sind.

12. Verfahren gemäß einem der vorhergehenden Ansprüche, wobei das
Zielobjekt ein teilweise von einer Multi-Layer-Isolationsschicht umgebener Satellit und/oder wobei das Ausgangsobjekt mindestens ein Teil eines steuerbaren Raumflugkörpers ist.

13. Steuerbarer Raumflugkörper, der mindestens einen Antrieb und eine
Rechen- und Messeinheit mit mindestens einem Sensor umfasst, wobei die Rechen- und Messeinheit dazu eingerichtet ist, ein Verfahren (1) gemäß einem der vorhergehenden Ansprüche auszuführen.

14. Raumflugkörper gemäß Anspruch 13, der zudem mindestens ein Greifelement umfasst und dazu eingerichtet ist, ein jeweiliges Zielobjekt auf Grundlage einer geschätzten relativen Position und Lage (30) des Zielobjekts in Bezug auf den Raumflugkörper zu greifen.

## Claims

1. A method (1) for estimating a relative position and location of a target object in relation to an origin object, wherein the method comprises:
- acquiring a plurality of sensor points (10) by scanning a surface of the target object by means of at least one sensor;
- carrying out an optimization method (100), in which the acquired sensor points (10) are iteratively assigned to a model point of a constant approximation model (20) for the target object in each case, until a total deviation of the acquired sensor points from the model points respectively assigned to them is minimized or is below a predetermined limit; and
- estimating the relative position and location (20) of the target object on the basis of an assignment of the sensor points resulting from the optimization method;
wherein the approximation model (20) comprises target object points (21) as model points, in which the approximation model corresponds to a precisely known surface region of the target object, and approximation points (22, 22'), in which the approximation model is known to be uncertain,
**characterized**
**in that** the optimization method (100) additionally comprises a single or repeated modification of the approximation model by changing at least a portion of its approximation points (22, 22') whilst keeping to the target object points (21).

2. The method according to Claim 1, wherein the optimization method (100) comprises at least one execution of an iterative closest point algorithm with constant approximation model and wherein the modification of the approximation model takes place at least once on the basis of an assignment of the acquired sensor points (10) resulting from the iterative closest point algorithm.

3. The method according to one of Claims 1 or 2, wherein the optimization method (100) comprises the use of an artificial neural network.

4. The method according to one of the preceding claims, wherein the change of the approximation points (22, 22') respectively takes place within a fixed range around points of a predetermined basic model of the target object.

5. The method according to one of the preceding claims, wherein the acquisition of the plurality of sensor points (10) is a subsequent acquisition and the carrying out of the optimization method (100) is a subsequent carrying out,
and wherein the method additionally comprises
- prior to the subsequent acquisition, a further acquisition of a further plurality of sensor points by scanning the surface or a different surface of the target object by means of the at least one sensor, and
- prior to the subsequent carrying out, a further carrying out of the optimization method,
and wherein the carrying out of the subsequent optimization method starts with a version of the approximation model, which results from the carrying out of the further optimization method using the further plurality of sensor points.

6. The method according to Claim 5, wherein the plurality of sensor points (10) and the further plurality of sensor points are acquired at distances, which differ from one another, of the at least one sensor from the target object.

7. The method according to one of Claims 5 or 6, wherein a range around points of a predetermined basic model of the target object, which is respectively determined for the changing of the approximation points (22, 22'), is, during the subsequent carrying out of the optimization method, smaller than or just as large as during the further carrying out.

8. The method according to one of Claims 5 to 7, wherein the estimation of the relative position and location (30) of the target object is a subsequent estimation and additionally takes place on the basis of a position and location estimation, which is based on an assignment resulting from the further carrying out of the optimization method.

9. The method according to one of the preceding claims, wherein the approximation points (22, 22') of the approximation model in each case simulate a movable or even flexible surface of the target object.

10. The method according to one of the preceding claims, wherein the target object points (21) of the approximation model in each case simulate a rigid surface of the target object.

11. The method according to one of the preceding claims, wherein the sensor data (10) and the approximation model (20) are respectively two-dimensional or respectively three-dimensional.

12. The method according to one of the preceding claims, wherein the target object is a satellite, which is partially surrounded by a multi-layer insulation layer, and/or wherein the origin object is at least a part of a manoeuvrable spacecraft.

13. A manoeuvrable spacecraft, which comprises at least a drive and a computing and measuring unit with at least one sensor, wherein the computing and measuring unit is set up to execute a method (1) according to one of the preceding claims.

14. The manoeuvrable spacecraft according to Claim 13, which additionally comprises at least one gripping element and is set up to grip a respective target object on the basis of an estimated relative position and location (30) of the target object in relation to the spacecraft.

## Revendications

1. Procédé (1) permettant d'estimer une position et une situation relative d'un objectif en référence à un objet initial, sachant que le procédé comprend :
- l'acquisition d'une pluralité de points de détection (10) par balayage d'une surface de l'objectif au moyen d'au moins un détecteur,
- l'exécution d'un procédé d'optimisation (100), dans lequel les points de détection acquis (10) sont attribués de façon itérative respectivement à un point de modèle d'un modèle d'approche stationnaire (20) pour l'objectif jusqu'à ce qu'un écart total des points de détection acquis des points de modèle par rapport aux points de modèle qui leur sont respectivement attribués soit minimisé ou se situe en dessous d'une limite prédéfinie, et
- l'estimation de la position et situation relative (20) de l'objectif sur la base d'une attribution des points de détection résultant du procédé d'optimisation,
sachant que le modèle d'approche (20) comprend des points d'objectif (21) en tant que points de modèle, dans lesquels le modèle d'approche correspond à une zone de surface précise connue de l'objectif, ainsi que des points d'approche (22, 22') dans lesquels le modèle d'approche est connu comme incertain, **caractérisé en ce que**
le procédé d'optimisation (100) comprend en plus une modification unique ou répétée du modèle d'approche par variation d'au moins une partie de ses points d'approche (22, 22') lors de la fixation sur les points d'objectif (21) .

2. Procédé selon la revendication 1, sachant que le procédé d'optimisation (100) comprend au moins une exécution d'un algorithme *Itératif du point le plus proche* (ICP) avec modèle d'approche stationnaire et sachant que la modification du modèle d'approche a lieu au moins une fois sur la base d'une attribution des points de détection acquis (10) résultant de l'algorithme *Itératif du point le plus proche.*

3. Procédé selon l'une quelconque des revendications 1 ou 2, sachant que le procédé d'optimisation (100) comprend une application d'un réseau neuronal artificiel.

4. Procédé selon l'une quelconque des revendications précédentes, sachant que la modification des points d'approche (22, 22') a lieu respectivement à l'intérieur d'une marge définie de points d'un modèle de base prédéfini de l'objectif.

5. Procédé selon l'une quelconque des revendications précédentes, sachant que l'acquisition de la pluralité de points de détection (10) est une acquisition ultérieure et l'exécution du procédé d'optimisation (100) est une exécution ultérieure,
et sachant que le procédé comprend en outre
- une autre acquisition avant l'ultérieure d'une autre pluralité de points de détection par balayage de la surface ou d'une autre surface de l'objectif au moyen d'au moins un détecteur, ainsi
- qu'une autre exécution ultérieure du procédé d'optimisation,
et sachant que l'exécution du procédé d'optimisation ultérieur démarre avec une version du modèle d'approche, qui résulte de l'exécution de l'autre procédé d'optimisation avec l'autre pluralité de points de détection.

6. Procédé selon la revendication 5, sachant que la pluralité de points de détection (10) et l'autre pluralité de points de détection sont acquises par l'objectif à une distance différente les uns des autres d'au moins un détecteur.

7. Procédé selon l'une quelconque des revendications 5 ou 6, sachant qu'une marge respectivement définie pour la modification des points d'approche (22, 22') d'un modèle de base prédéfini de l'objectif lors de l'exécution ultérieure du procédé d'optimisation est plus petite ou exactement aussi grande que lors de l'autre exécution.

8. Procédé selon l'une quelconque des revendications 5 à 7, sachant que l'estimation de la position et situation relative (30) de l'objectif est une estimation ultérieure et a lieu en outre sur la base d'une estimation de position et de situation, qui repose sur une attribution résultant de l'autre exécution du procédé d'optimisation.

9. Procédé selon l'une quelconque des revendications précédentes, sachant que les points d'approche (22, 22') du modèle d'approche reproduisent respectivement une surface mobile ou même flexible de l'objectif.

10. Procédé selon l'une quelconque des revendications précédentes, sachant que les points d'objectif (21) du modèle d'approche reproduisent respectivement une surface rigide de l'objectif.

11. Procédé selon l'une quelconque des revendications précédentes, sachant que les données de détection (10) et le modèle d'approche (20) sont respectivement de type bidimensionnel ou respectivement de type tridimensionnel.

12. Procédé selon l'une quelconque des revendications précédentes, sachant que l'objectif est un satellite entouré partiellement d'une couche d'isolation multicouche et/ou sachant que l'objet initial est au moins une partie d'un engin spatial pouvant être commandé.

13. Engin spatial pouvant être commandé, qui comprend au moins un système d'entraînement et une unité de calcul et de mesure avec au moins un détecteur, sachant que l'unité de calcul et de mesure est agencée pour exécuter un procédé (1) selon l'une quelconque des revendications précédentes.

14. Engin spatial selon la revendication 13, qui comprend en outre au moins un élément de préhension et est agencé pour saisir un objectif respectif sur la base d'une position et situation (30) relative estimée de l'objectif en référence à l'engin spatial.
